Europäisches Patentamt

European Patent Office

Office européen des brevets

(11) Numéro de publication : **0 365 391 B1**

## (12) FASCICULE DE BREVET EUROPEEN

(45) Date de publication du fascicule du brevet :
05.02.92 Bulletin 92/06

(21) Numéro de dépôt : **89402766.3**

(22) Date de dépôt : **09.10.89**

(51) Int. Cl.⁵ : **F16L 19/08**

(54) **Dispositif de liaison des extrémités d'un tube composite fortement sollicité axialement avec des brides métalliques et son procédé de fabrication.**

(30) Priorité : **13.10.88 FR 8813468**

(43) Date de publication de la demande :
**25.04.90 Bulletin 90/17**

(45) Mention de la délivrance du brevet :
**05.02.92 Bulletin 92/06**

(84) Etats contractants désignés :
**DE GB IT NL SE**

(56) Documents cités :
**EP-A- 0 266 810**
**DE-A- 1 550 048**
**DE-A- 2 321 769**
**DE-U- 7 219 612**
**FR-A- 2 434 300**
**GB-A- 2 051 304**

(73) Titulaire : **AEROSPATIALE SOCIETE
NATIONALE INDUSTRIELLE
37, Boulevard de Montmorency
F-75016 Paris (FR)**

(72) Inventeur : **Aubry, Jacques Antoine
02 Avenue Marie Gasquet
F-13480 Cabries (FR)**
Inventeur : **Mauduit, Daniel André Résidence
des Jardins de Valescure 362, rue du Suveret
F-83600 Fréjus (FR)**

(74) Mandataire : **Lhuillier, René et al
ARMENGAUD JEUNE CABINET LEPEUDRY
52, avenue Daumesnil
F-75012 Paris (FR)**

EP 0 365 391 B1

## Description

La présente invention a pour objet un dispositif de liaison axiale d'un tube en matière composite sur des embouts métalliques et concerne plus précisément un dispositif utilisant l'incorporation dans la structure composite d'une frette métallique servant de pièce d'ancrage aux embouts d'extrémité.

L'invention est plus particulièrement destinée, entre autres applications, à équiper les trains d'atterrissage d'aérodynes, notamment d'avions légers ou d'hélicoptères, dont les futs tubulaires avantageusement réalisés en matériau composite doivent d'une part tenir à la pression interne et d'autre part résister à des efforts axiaux de traction-compression.

Dans le domaine de la liaison de futs ou arbres en matériaux composites à des embouts métalliques, il a été proposé un certain nombre de solutions qui peuvent donner satisfaction dans des applications spécifiques mais qui restent insuffisants pour les utilisations à fortes contraintes, comme c'est le cas pour les vérins et amortisseurs des pneumatiques des trains d'atterrissage.

On connaît par le FR-A 2434300 un élément d'arbre de transmission en matière plastique renforcée de fibres dans lequel sont prévus des moyens pour réaliser une liaison efficace entre l'arbre lui-même et la chape d'un joint universel et suffisante pour résister aux forces de flexion et de couple imposées à l'élément. A cet effet, l'arbre est relié à un manchon solidaire de la chape par un moyen d'ancrage mécanique constitué par exemple par une nervure annulaire associée éventuellement à d'autres aspérités telles que crêtes, bossages ou rugosités. L'ancrage est réalisé à partir d'une nervure ménagée sur l'embout qui s'appuie sur une empreinte correspondante prévue sur le tube. Cette liaison connue n'est réalisée cependant que pour encaisser des efforts de flexion et de couple et non pas de traction-compression.

D'après le FR-A 2343918, il est connu de réaliser une bielle de commande dont le corps tubulaire, constitué de fibres à haute résistance agglomérées par une résine synthétique polymérisée, est solidarisé avec un embout métallique portant extérieurement des stries et des ondulations. Pour réaliser la bielle on bobine sur le mandrin du corps tubulaire, équipé de ses embouts métalliques d'extrémité, des rubans de fibres appropriées enrobées dans de la résine époxy non polymérisée, les fibres étant parallèles ou en tresses. On bobine ainsi plusieurs couches de fibres selon des orientations différentes. Aux extrémités les couches de fibres viennent épouser les stries ou les ondulations ; après polymérisation, le frettage des fibres sur les parties striées des embouts donne une bielle dont les embouts sont très correctement solidarisés du corps tubulaire et qui peut supporter des efforts en traction-compression.

Il existe aussi une autre méthode de liaison telle que décrite dans le US-A 3989280 qui consiste à assurer une liaison entre un tuyau en composite et un tuyau métallique par l'intermédiaire d'un collier ou d'un épaulement périphérique solidaire d'un tuyau et sur lequel est fabriqué l'autre tuyau.

Dans toutes ces réalisations, il y a donc interférence de forme, à un niveau particulier, entre la pièce en matériau composite et un embout métallique. Bien souvent, il faut donc que l'embout métallique soit conformé de façon particulière, par exemple avec des nervures, pour pouvoir coopérer avec la partie en matériau composite. Parfois, ce type de liaison impose à l'embout métallique ou au tube composite d'avoir une surface interne ou externe irrégulière au niveau des nervures ce qui peut gêner le passage d'organes coulissants. Hormis, ces inconvénients, ces types de liaisons peuvent s'avérer insuffisamment résistants pour des futs tubulaires soumis à de fortes contraintes en traction-compression, comme c'est le cas pour les trains d'atterrissage hydro-pneumatiques d'hélicoptères.

L'invention a donc pour objet un dispositif de liaison des extrémités d'un tube en matériau composite fortement sollicité axialement, avec des brides métalliques, qui est constitué d'un frette métallique annulaire formant une bague, noyée dans l'épaisseur du tube composite à l'extérieur ou à l'intérieur de celui-ci et arasée au diamètre externe ou interne du tube composite, la bague constituant un élément d'ancrage pour un embout ou autre ferrure métallique à l'aide d'un moyen complémentaire de liaison axiale.

Selon une caractéristique particulière de l'invention, la liaison entre la bague solidaire du tube composite et l'embout métallique est assurée par un jonc métallique torique logé dans deux gorges semi-circulaires prévues d'un côté sur la face externe de la bague et de l'autre côté sur la face interne de l'embout, ou encore cette liaison est assurée par un filetage prévu sur l'extérieur de la bague, sur lequel se visse l'extrémité de l'embout, ou encore par un anneau solidaire de la bague coopérant avec une bride solidaire de l'embout.

En variante, la frette annulaire présente une forme extérieure ou intérieure polygonale qui interfère en torsion avec une forme intérieure ou extérieure polygonale correspondante du tube composite.

L'invention a également pour objet un procédé de fabrication du dispositif de liaison qui consiste à bobiner des fibres préimprégnées de résine synthétique thermodurcissable ou draper un tissu préimprégné de ce même type de résine autour d'un mandrin préalablement coiffé d'une vessie gonflable, à entourer le mandrin d'un moule extérieur préalablement muni de frettes métalliques dont la face intérieure débordante présente la forme d'un arc de cercle, — à gonfler la vessie par application d'un fluide sous pression, par exemple d'air comprimé par des conduits, pour que les frettes soient contournées par les tissus ou fibres bobinées, et encastrées dans le matériau composite, à polymériser à chaud et sous pression la résine d'imprégnation des fibres ou des tissus et après démoulage — à araser la frette au diamètre intérieur ou extérieur du tube pour obtenir une bague d'ancrage dont la surface intérieure ou extérieure est alignée avec la surface voisine du tube en matériau composite, et à fixer la ferrure métallique sur la bague d'ancrage par un moyen de liaison. On peut aussi assurer la mise en place des constituants du matériau composite du tube dans le moule par un empilage de tresses sèches sur un mandrin muni de frettes métalliques annulaires suivi d'une opération d'injection sous pression de la résine synthétique ou encore par un bobinage filamentaire de fils ou de rubans préimprégnés de résine sur un mandrin muni de frettes métalliques annulaires.

D'autres caractéristiques particulières et avantages de l'invention ressortiront de la description qui va suivre du dispositif de liaison et de son procédé de fabrication, dans laquelle il est fait référence aux dessins annexés qui représentent :

Figure 1 : une vue en coupe du dispositif de liaison ;

Figures 2 et 3 : des vues schématiques en coupe d'un procédé de fabrication ;

Figures 4 et 5 : deux variantes de réalisation d'une liaison tube-embout ;

Figure 6 : un exemple d'utilisation du dispositif de liaison ;

Figures 7 et 8 : des vues en coupe à plus grande échelle de certaines liaisons selon la figure 6.

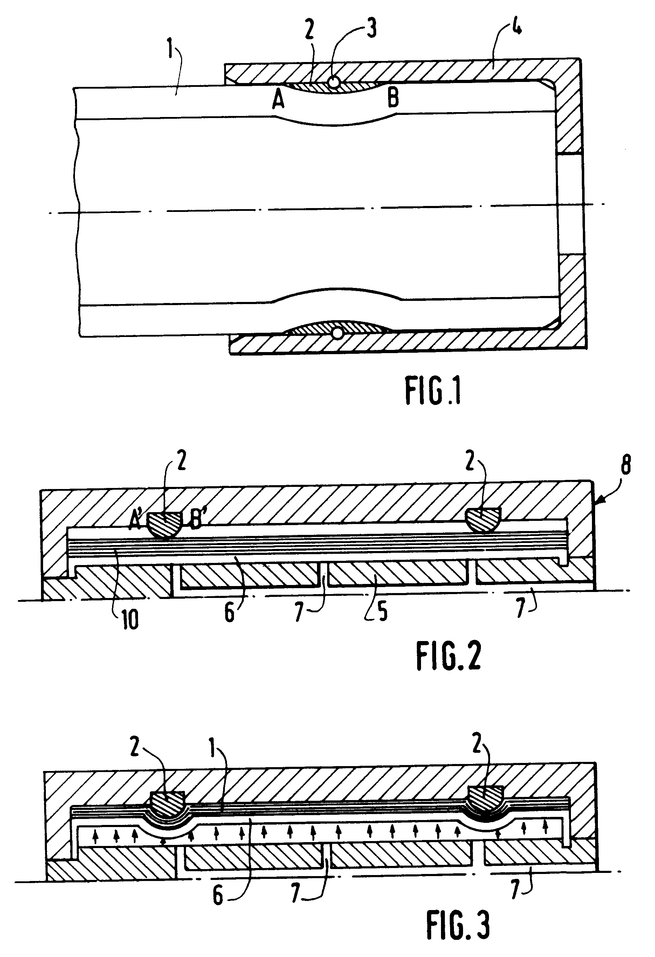

On a représenté schématiquement à la figure 1 la liaison axiale d'un tube composite 1 et d'un embout métallique 4 emmanché sur l'extrémité dudit tube. Pour assurer cette liaison, on a inséré à l'extérieur du tube composite une frette annulaire 2 qui présente en coupe la forme d'un segment circulaire. La partie courbe AB de ce segment est tournée vers le tube et disposée dans l'outillage de fabrication de telle sorte qu'elle fasse saillie à l'intérieur du tube et par construction reste encastrée dans le matériau composite, comme on le verra plus loin. Une liaison par jonc 3 est assurée entre ladite frette et l'embout 4. Par interférence de formes, il n'y a plus de possibilités de déplacement axial de l'embout sur le tube, même sous des efforts axiaux importants.

En effet, ces efforts axiaux sont transmis du tube en matériau composite dans la frette annulaire par une surface d'appui constituée par la calotte sphérique, relativement importante, de telle sorte que la pression de matage sur le matériau composite du tube reste modérée et qu'en conséquence elle ne risque pas d'endommager ce matériau. Par contre, la liaison de la frette annulaire avec l'embout par l'intermédiaire du jonc permet de faire supporter aux gorges du logement de celui-ci ménagées dans des pièces métalliques et au jonc lui-même, également métallique, de très importantes pressions de matage sans risque de détérioration du métal des éléments assurant cette liaison.

On décrit maintenant plus en détail, en référence aux figures 2 et 3, les étapes de réalisation d'une telle liaison.

Un mandrin 5 est coiffé d'une vessie gonflable 6, des conduits 7 d'alimentation en air comprimé permettant d'établir une pression dans la chambre délimitée par le mandrin et la vessie. On bobine des fibres ou on drape un tissu préimprégné 10 tout autour du mandrin, par dessus la vessie. On entoure le mandrin d'un moule extérieur 8 préalablement muni de frettes dont la face intérieure A′ B′ débordante présente la forme d'un arc de cercle. Lors de la déformation de la vessie gonflable 6 par application d'air comprimé par les conduits 7, on obtiendra une interférence de forme entre le tube composite 1 en cours d'ébauche (figure 3) et les frettes 2. On a ainsi des frettes 2 extérieures au tube composite, contournées par les tissus 10 ou les fibres bobinées, qui se trouvent ainsi encastrées dans le matériau composite. On polymérise à chaud et sous pression la résine d'imprégnation. On démoule ensuite le tube muni de ses frettes.

Après usinage autour pour être arasée au diamètre extérieur du tube composite, chaque frette 2 forme une bague qui constitue un excellent ancrage pour la liaison axiale du tube avec ses embouts métalliques d'extrémité dont la surface extérieure de la frette est alignée avec la surface extérieure voisine du tube composite. Comme on l'a indiqué en référence à la figure 1, cette liaison peut être réalisée par un jonc métallique torique 3 logé dans deux gorges semi-circulaires prévues d'un côté sur la face externe de la bague 2 et de l'autre côté sur la face interne de l'embout 4.

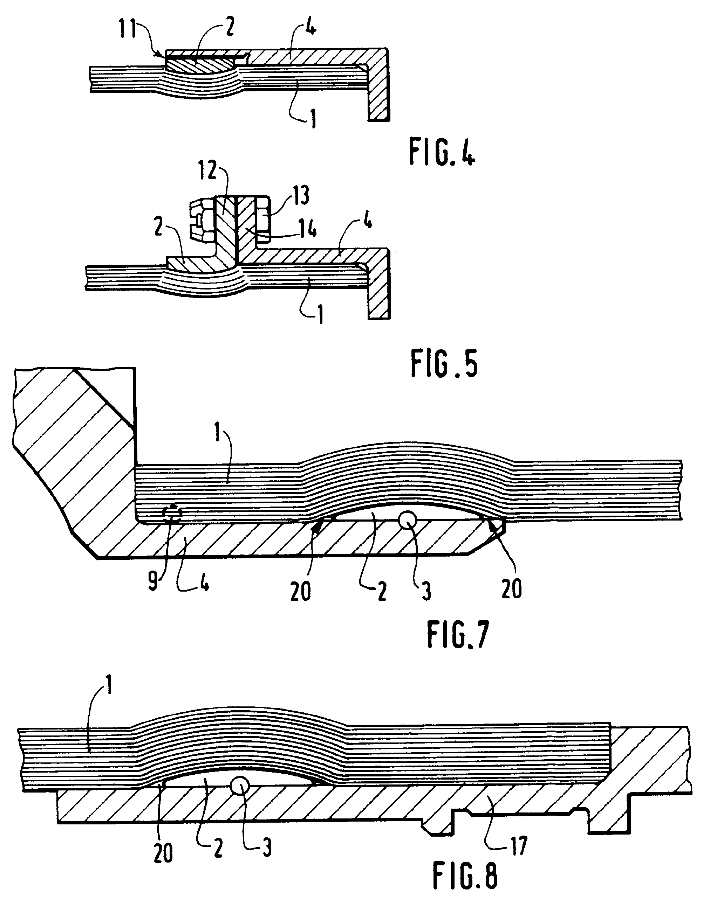

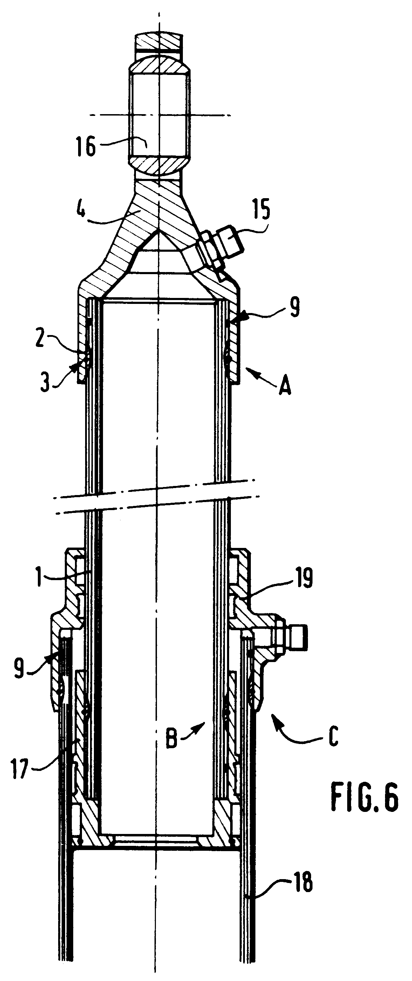

La liaison peut aussi être réalisée par un filetage 11 prévu sur l'extérieur de la bague 2, sur lequel vient se visser l'extrémité de l'embout 4 (figure 4). La liaison peut encore être réalisée par un anneau 12 solidaire de la bague 2 fixé par un boulonnage 13 à une bride 14 solidaire de l'embout 4 (figure 5).

En variante, et dans le cas où, aux efforts axiaux et radiaux, s'ajoute une sollicitation en couple, le principe d'interférence de formes entre la frette et le matériau composite du tube reste valable ; il suffit alors de donner à la frette annulaire une forme extérieure ou intérieure polygonale qui vient interférer en torsion avec une forme intérieure ou extérieure polygonale correspondante du tube. Dans ce qui précède on a parlé de frettes formant des bagues, localisées à l'extérieur d'un tube composite. Il va de soi que la même technique pourrait être appliquée, sans sortir du cadre de l'invention à des frettes placées à l'intérieur d'un tube ou d'un fut composite en vue d'une liaison avec une pièce métallique interne audit tube.

On a représenté à la figure 6 un exemple d'utilisation sur un ensemble oléo-pneumatique de train d'atterrissage. L'amortisseur-vérin comporte un embout d'extrémité 4 muni d'un raccord 15 pour la mise en communication avec un circuit hydraulique externe ; le fond de l'embout se prolonge par une chape à rotule 16 pour l'articulation de l'amortisseur sur le fuselage. L'embout 4 est fixé au tube composite 1 par la liaison décrite, c'est-à-dire la bague 2 et le jonc 3 (liaison A). On remarquera la présence d'un joint d'étanchéité 9 entre l'extrémité du tube et la bague.

A l'autre extrémité le tube composite 1 est relié (référence 6), toujours par une même liaison à bague et jonc, avec un piston 17 destiné à coulisser dans une tige creuse composite 18, elle-même fixée encore par une même liaison (référence C) à un palier 19 en saillie radiale vers l'intérieur pour permettre le coulissement de façon étanche sur le tube 1. D'autres liaisons identiques non représentées peuvent être prévues entre tous autres tubes et tiges composites et les embouts ou ferrures métalliques auxquels ils doivent être raccordés. Des joints toriques 9 sont intercalés entre manchon et tube pour parfaire l'étanchéité. Ces liaisons permettent une reprise des efforts axiaux en traction et en compression. L'étanchéité de la cavité interne du tube est assurée grâce aux joints 9. On notera également l'absence de surépaisseurs par rapport au tube composite, qui permet le montage de fourreaux ou de pistons sur les diamètres intérieur et extérieur du tube, et qui permet aussi de démonter les embouts.

Les tubes composites munis de ces bagues de liaison 2 peuvent être réalisés par drapage de nappes de tissus préimprégnés suivi de compactage par vessie gonflable comme décrit précédemment en référence aux figures 2 et 3. Ils peuvent aussi être obtenus par empilage de tresses sèches puis imprégnation par injection sous pression ou encore par bobinage filamentaire de fils ou de rubans.

On voit sur la figure 7 une représentation à plus grande échelle de la liaison A de la figure 6, qui montre la disposition des tissus constituant le tube composite 1. On remarque que des coins de résine 20 se forment entre les tissus et la bague 2 aux points de contact du tube et de l'embout 4. Le joint torique d'étanchéité 9 occuperait la position représentée en pointillés.

De la même façon la figure 8 montre la disposition des tissus dans la liaison B entre le tube 1 et le piston 17. On y retrouve les coins de résine 20 en bordure de la bague 2.

## Revendications

1. Dispositif de liaison des extrémités d'un tube en matériau composite fortement sollicité axialement, avec des brides métalliques caractérisé en ce qu'il est constitué d'une frette métallique annulaire (2) formant une bague, noyée dans l'épaisseur du tube composite (1) à l'extérieur ou à l'intérieur de celui-ci et arasée au diamètre externe ou interne du tube composite et en ce que la bague (2) constitue un élément d'ancrage pour un embout ou autre ferrure métallique (4, 17, 19) à l'aide d'un moyen complémentaire de liaison (3, 11, 13, 14).

2. Dispositif de liaison selon la revendication 1, caractérisé en ce que la liaison entre la bague (2) solidaire du tube composite (1) et l'embout métallique (4) est assurée par un jonc métallique torique (3) logé dans deux gorges semi-circulaires prévues d'un côté sur la face externe de la bague (2) et de l'autre côté sur la face interne de l'embout (4).

3. Dispositif de liaison selon la revendication 1, caractérisé en ce que la liaison entre la bague (2) solidaire du tube composite (1) et l'embout métallique (4) est assurée par un filetage (11) prévu sur l'extérieur de la bague (2), sur lequel se visse l'extrémité de l'embout.

4. Dispositif de liaison selon la revendication 1, caractérisé en ce que la liaison entre la bague (2) solidaire du tube composite (1) et l'embout métallique (4) est assurée entre un anneau (12) solidaire de la bague et une bride (14) solidaire de l'embout.

5. Dispositif de liaison selon la revendication 1, caractérisé en ce que la frette annulaire (2) présente une forme extérieure ou intérieure polygonale, qui interfère en torsion avec une forme intérieure ou extérieure polygonale correspondante du tube composite (1).

6. Procédé de fabrication du dispositif de liaison selon la revendication 1, caractérisé en ce qu'il consiste à bobiner des fibres préimprégnées de résine synthétique thermodurcissable ou draper des tissus préimprégnés de cette même résine (1) autour d'un mandrin (5) préalablement coiffé d'une vessie gonflable (6), à entourer le mandrin d'un moule extérieur (8) préalablement muni de frettes métalliques (2) dont la face intérieure (A' B') débordante présente la forme d'un arc de cercle, à gonfler la vessie par application d'un fluide sous pression au moyen des conduits (7), pour que les frettes soient contournées par les tissus ou fibres bobinées et encastrées dans le matériau composite, à polymériser à chaud la résine d'imprégnation des fibres ou des tissus en plaçant le moule (8) avec la vessie (6) gonflée dans un four, et après démoulage du tube ainsi constitué, à araser la frette au diamètre intérieur ou extérieur du tube pour obtenir une bague d'ancrage dont la surface intérieure ou extérieure est alignée avec la surface voisine du tube en matériau composite, et à fixer la ferrure métallique (4, 17, 19) sur la bague d'ancrage par un moyen de liaison (3, 11, 13, 14).

7. Procédé de fabrication du dispositif de liaison selon la revendication 1, caractérisé en ce qu'il consiste à assurer un empilage de tresses sèches sur un mandrin (5) muni de frettes métalliques annulaires, à introduire cet empilage dans un moule extérieur étanche (8), à injecter sous pression entre le mandrin et le moule une résine synthétique d'imprégnation des tresses, à polymériser à chaud cette résine et après démoulage du tube ainsi constitué à araser la frette au diamètre intérieur du tube pour obtenir une bague d'ancrage dont la surface intérieure est alignée avec la surface voisine du tube en matériau composite et enfin à fixer la ferrure métallique (4, 17) sur la bague d'ancrage par un moyen de liaison (3, 11, 13, 14).

8. Procédé de fabrication du dispositif de liaison selon la revendication 1, caractérisé en ce qu'il consiste à assurer un bobinage filamentaire de fils ou de rubans préimprégnés de résine synthétique thermodurcissable sur un mandrin démontable muni de frettes métalliques annulaires, à polymériser à chaud cette résine d'imprégnation, à couper les surlongeurs du tube ainsi constitué, à sortir les éléments constitutifs du mandrin, à araser la frette au diamètre intérieur du tube pour obtenir une bague d'ancrage dont la surface intérieure est alignée sur la surface voisine du tube en matériau composite et enfin à fixer la ferrure métallique (4, 17) sur la bague d'ancrage par un moyen de liaison (3, 11, 13, 14).

## Patentansprüche

1. Vorrichtung zur Verbindung von Enden eines axial hoch beanspruchten, aus einem Verbundwerkstoff bestehenden Rohres mit metallischen Flanschen, dadurch gekennzeichnet, daß sie ein ringförmiges, metallisches Band (2) aufweist, welches einen Ring bildet, der in die Wandstärke des Verbundwerkstoff-Rohres (1) an dessen Außen- oder Innenseite eingelassen und auf den äußeren bzw. inneren Durchmesser des Verbundwerkstoff-Rohres abgeschliffen ist, und daß der Ring ein Element zur Verankerung für ein metallisches Ansatzstück oder ein anderes metallisches Anschlußstück (4, 17, 19) mit Hilfe zusätzlicher Verbindungsmittel (3, 11, 13, 14) bildet.

2. Vorrichtung nach Anspruch 1, dadurch gekennzeichnet, daß die Verbindung zwischen dem mit dem Verbundwerkstoff-Rohr (1) einstückigen Ring (2) und dem metallischen Ansatzstück (4) durch einen wulstförmigen, metallischen Sprengring (3) sichergestellt ist, der in zwei halbkreisförmigen Nuten sitzt, die einerseits an der Außenfläche des Rings (2) und andererseits an der Innenfläche des Ansatzstücks (4) vorgesehen sind.

3. Vorrichtung nach Anspruch 1, dadurch gekennzeichnet, daß die Verbindung zwischen dem mit dem Verbundwerkstoff-Rohr (1) einstückigen Ring (2) und dem metallischen Ansatzstück (4) durch ein an der Außenfläche des Rings (2) vorgesehenes Gewinde (11) sichergestellt ist, auf das das Ende des Ansatzstücks aufgeschraubt ist.

4. Vorrichtung nach Anspruch 1, dadurch gekennzeichnet, daß die Verbindung zwischen dem mit dem Verbundwerkstoff-Rohr (1) einstückigen Ring (2) und dem metallischen Ansatzstück (4) über eine mit dem Ring (2) einstückige Ringfläche (12) und einen mit dem Ansatzstück einstückigen Flansch (14) sichergestellt ist.

5. Vorrichtung nach Anspruch 1, dadurch gekennzeichnet, daß das ringförmige Band (2) eine polygonale außen- oder innenseitige Formgebung aufweist, die mit einer zugehörigen polygonalen innen- bzw. außenseitigen Formgebung des Verbundwerkstoff-Rohres unter Verbiegung zusammenwirkt.

6. Verfahren zur Herstellung einer Vorrichtung nach Anspruch 1, dadurch gekennzeichnet, daß es beinhaltet : Wickeln von mit einem synthetischen, warmaushärtendem Kunstharz vorimprägnierten Fasern oder Drapieren von mit diesem Kunstharz vorimprägnierten Geweben um einen zuvor mit einer aufblasbaren Blase (6) bedeckten Wickeldorn (5) herum; Umgeben des Wickeldorns (5) mit einer äußeren Preßform (8), die zuvor mit metallischen Bändern (2) versehen wird, deren vorstehende Innenfläche (A' B') die Gestalt eines Kreisbogens besitzt ; Aufblasen der Blase durch Beaufschlagen mit einem unter Druck stehenden Fluid über Kanäle (7), damit sich die Bänder durch die umwickelten Gewebe oder Fasern biegen und in den Verbundwerkstoff einsenken ; Polymerisieren des Harzes, mit dem die Fasern oder Gewebe imprägniert sind, unter Wärmeeinfluß, indem die Preßform (8) mit der aufgeblasenen Blase (6) in einen Ofen gebracht wird, wonach das so erhaltene Rohr aus der Form entnommen wird ; Abschleifen des Bandes auf den inneren oder äußeren Durchmesser des Rohres, um einen Verankerungsring zu erhalten, dessen innere bzw. äußere Fläche mit der angrenzenden Fläche des Verbundwerkstoff-Rohres fluchtet ; und Befestigen des metallischen Anschlußstücks (4, 17, 19) an dem Verankerungsring durch ein verbindendes Mittel (3, 11, 13, 14).

7. Verfahren zur Herstellung einer Vorrichtung nach Anspruch 1, dadurch gekennzeichnet, daß es beinhaltet : Aufbringen eines Stapels aus Trockengeflechten auf einen mit ringförmigen, metallischen Bändern versehenen Wickeldorn (5) ; Einführen des Stapels in eine abgedichtete äußere Preßform (8) ; Einspritzen eines synthetischen, zur Imprägnierung der Geflechte dienenden Kunstharzes unter Druck zwischen den Wickeldorn und die Preßform ; Polymerisieren dieses Harzes unter Wärmeeinfluß und anschließendes Entnehmen des so erhaltenen Rohres aus der Form ; Abschleifen des Bandes auf den inneren Durchmesser des Rohres, um einen Verankerungsring zu erhalten, dessen Innenfläche mit der angrenzenden Fläche des Verbundwerkstoff-Rohres fluchtet ; und schließlich Befestigen des metallischen Anschlußstücks (4, 17) an dem Verankerungsring durch ein verbindendes Mittel (3, 11, 13, 14).

8. Verfahren zur Herstellung einer Vorrichtung nach Anpruch 1, dadurch gekennzeichnet, daß es beinhaltet : Aufbringen einer faserigen Wicklung aus mit einem synthetischen, warmaushärtenden Kunstharz vorimprägnierten Fäden oder Streifen auf einen zerlegbaren, mit ringförmigen, metallischen Bändern versehenen Wickeldorn ; Polymerisieren dieses Imprägnierharzes unter Wärmeeinfluß ; Abtrennen der Überlänge des so erhaltenen Rohres ; Abnehmen der den Wickeldorn bildenden Teile ; Abschleifen des Bandes auf den Innendurchmesser des Rohres, um einen Verankerungsring zu erhalten, dessen Innenfläche mit der angrenzenden Fläche des Verbundwerkstoff-Rohres fluchtet ; und schließlich Befestigen des metallischen Anschlußstücks (4, 17) an dem Verankerungsring durch ein verbindendes Mittel (3, 11, 13, 14).

## Claims

1. Device for connecting the ends of a highly axially loaded tube of composite material, with metal flanges, characterised in that it consists of an annular metallic hoop (2) forming a ring, embedded in the thickness of the composite tube (1) outside or inside the latter, and levelled to the outside or inside diameter of the composite tube, and that the ring (2) forms an anchorage element for an end-piece or other metallic fitting (4, 17, 19) with the aid of a complementary connecting means (3, 11, 13, 14).

2. Connecting device according to Claim 1, characterised in that the connection between the ring (2), rigidly connected to the composite tube (1), and the metallic end-piece (4) is produced by a toroidal metallic retaining ring (3) housed in two semi-circular grooves provided on one side on the outer face of the ring (2) and on the other side on the inner face of the end-piece (4).

3. Connecting device according to Claim 1, characterised in that the connection between the ring (2), rigidly connected to the composite tube (1), and the metallic end-piece (4) is produced by a thread (11) provided on the outside of the ring (2), onto which the end of the end-piece is screwed.

4. Connecting device according to Claim 1, characterised in that the connection between the ring (2), rigidly connected to the composite tube (1), and the metallic end-piece (4) is produced between a collar (12) rigidly connected to the ring and a flange (14) rigidly connected to the end-piece.

5. Connecting device according to Claim 1, characterised in that the annular hoop (2) has a polygonal external or internal shape which interferes in torsion with a corresponding polygonal internal or external shape of the composite tube (1).

6. Method for the manufacture of the connecting device according to Claim 1, characterised in that it consists in winding fibres pre-impregnated with a thermosetting synthetic resin or draping cloths pre-impregnated with the same resin (1) round a mandrel (5) previously capped with an inflatable bladder (6), surrounding the mandrel with an outer mould (8) previously provided with metallic hoops (2) the inner overhanging face (A', B') of which is in the shape of an arc of a circle, inflating the bladder by the application of a pressurised fluid by means of ducts (7), so that the hoops are wrapped round by the wound cloths or fibres and embedded in the composite material, heat-polymerising the resin impregnating the fibres or cloths by placing the mould (8) with the inflated bladder (6) in an oven, and after unmoulding the tube thus formed, levelling the hoop to the inside or outside diameter of the tube in order to obtain an anchorage ring, the inner or outer surface of which is aligned with the adjacent surface of the tube of composite material, and fastening the metallic fitting (4, 17, 19) onto the anchorage ring by a connecting means (3, 11, 13, 14).

7. Method for the manufacture of the connecting device according to Claim 1, characterised in that it consists in stacking dry braids on a mandrel (5) provided with annular metallic hoops, introducing the said stack into a leaktight outer mould (8), injecting under pressure, between the mandrel and the mould, a synthetic resin for impregnating the braids, heat-polymerising the said resin and after unmoulding the tube thus formed, levelling the hoop to the inside diameter of the tube in order to obtain an anchorage ring, the inner surface of which is aligned with the adjacent surface of the tube of composite material, and finally fastening the metallic fitting (4, 17) onto the anchorage ring by a connecting means (3, 11, 13, 14).

8. Method for the manufacture of the connecting device according to Claim 1, characterised in that it consists in carrying out filament winding of filaments or tapes pre-impregnated with thermo-setting synthetic resin on a removable mandrel provided with annular metallic hoops, heat-polymerising the said impregnating resin, cutting the overlengths of the tube thus formed, removing the elements constituting the mandrel, levelling the hoop to the inside diameter of the tube in order to obtain an anchorage ring, the inner surface of which is aligned with the adjacent surface of the tube of composite material, and finally fastening the metallic fitting (4, 17) to the anchorage ring by a connecting means (3, 11, 13, 14).

FIG.1

FIG.2

FIG.3

FIG.4

FIG.5

FIG.7

FIG.8

FIG.6